# EUROPÄISCHE PATENTSCHRIFT

(11) **EP 0 724 754 B1**
(45) Veröffentlichungstag und Bekanntmachung des Hinweises auf die Patenterteilung: **07.01.1998**
(21) Anmeldenummer: 94929404.5
(22) Anmeldetag: 17.10.1994
(51) Int. Cl.: G06K 17/00, G06K 1/12

(54) **VORRICHTUNG ZUM LESEN UND KENNZEICHNEN VON BEDRUCKBAREN, KARTENFÖRMIGEN DATENTRÄGERN**
DEVICE FOR READING AND IDENTIFYING PRINTABLE CARD-TYPE DATA MEDIA
DISPOSITIF POUR LA LECTURE ET L'IDENTIFICATION DE SUPPORTS D'INFORMATION IMPRIMABLES, SOUS FORME DE CARTES

(30) Priorität: 19.10.1993 AT 2098/93
(43) Veröffentlichungstag der Anmeldung: 07.08.1996
(73) Patentinhaber: SKIDATA COMPUTER GESELLSCHAFT m.b.H., A-5083 Gartenau (AT)
(72) Erfinder: KOCZNAR, Wolfram, A-6020 Innsbruck (AT); MIESBAUER, Harald, A-4644 Scharnstein (AT)
(74) Vertreter: Torggler, Paul, Dr.
(86) Internationale Anmeldenummer: AT9400150
(87) Internationale Veröffentlichungsnummer: WO9511493

(56) Entgegenhaltungen:
- DE-A- 3 704 059

## Beschreibung

Die Erfindung betrifft eine Vorrichtung zum Lesen und Kennzeichnen von bedruckbaren, kartenförmigen Datenträgern, die eine thermosensitive Schicht aufweisen, mit einem Transportmechanismus zur linearen Bewegung des Datenträgers in einem eine Transportbahn bestimmenden flachen Kanal, mit einer einen Thermodruckkopf aufweisenden Einrichtung zur visuell lesbaren Kennzeichnung des Datenträgers, und mit einer dem Thermodruckkopf gegenüberliegenden, zum Thermodruckkopf hin bewegbar angeordneten Anpreßrolle.

Derartige Vorrichtungen sind beispielsweise aus der EP-B 199 234 bekannt, gemäß der der Thermodruckkopf starr an der Transportbahn angeordnet und die gegenüberliegende Anpreßrolle federnd beweglich aufgehängt ist. Aus der WO-88/04458 ist eine Vorrichtung bekannt, die eine abgewinkelte Führungsbahn und einen im Knickbereich beweglich angeordneten Thermodruckkopf aufweist, wobei der Datenträger sowohl bei der Hin- als auch bei der Rückbewegung abgebogen werden muß.

Eine weitere Vorrichtung dieser Art zeigt die EP-A 437 724, die wiederum eine gerade Führungsbahn aufweist, in die der Thermodruckkopf einschwenkbar ist. In beiden letzten Ausführungen ist die gegenüberliegende Anpreßrolle starr angeordnet.

Schließlich ist aus der DE-A 37 04 059 eine weitere derartige Vorrichtung bekannt, die mit einem Thermotransferdrucker ausgestattet ist, mittels dem sich bewegende Datenträger über ein mitlaufendes Karbonband bedruckbar sind. Die zugehörige Antriebsrolle ist hier an einem Hebel angelenkt, der von einem Elektromagneten gegen den Thermotransferdruckkopf bewegbar ist. Dem Thermotransferdruckkopf ist ein Magnetstreifenlese-/codiergerät vor- und ein Strichcodeleser nachgeordnet, sodaß auf dem Magnetstreifen gespeicherte Daten auch aufgedruckt und kontrolliert werden können.

Für den Einsatz eines Thermodruckkopfes soll der Datenträger zumindest im Berührungsbereich geringfügig gewölbt sein, damit der Thermodruckkopf etwa tangential anliegen kann. Soll die Wölbung des Datenträgers durch die Abwinklung der Führungsbahn oder durch das Gegeneinanderpressen des Thermodruckkopfes und der Anpreßrolle erreicht werden, so muß der Datenträger leicht biegbar sein und eine geringe Dicke aufweisen.

Kartenförmige Datenträger weisen meist nicht nur den durch Wärmeeinwirkung bedruckbaren Bereich auf, sondern können zusätzlich auch einen Magnetstreifen (EP-B 199 234, EP-A 437 724, DE-A 37 04 059) aufweisen und/oder ein Elektronikmodul (WO-92/21105) enthalten, die beispielsweise als Scheck- oder Telefonwertkarten, Skipaß etc. verwendbar sind und eine größere Dicke und eine erhöhte Biegesteife aufweisen.

Die Erfindung hat es sich nun zur Aufgabe gestellt, eine Kartenkontroll- und -bearbeitungsvorrichtung der eingangs genannten Art zu schaffen, in die kartenförmige Datenträger beliebiger Dicke einführbar sind.

Erfindungsgemäß wird dies dadurch gelöst, daß der Thermodruckkopf so weit außerhalb der Transportbahn vorgesehen ist, daß thermisch nicht zu bedruckende Datenträger, die den Thermodruckkopf passieren, diesen nicht berühren. Dies erlaubt die Verarbeitung aller Arten von Kartenförmigen Datenträgern, da sie bevorzugt entlang einer ebenen Transportbahn bewegt werden. Wenn der Datenträger mittels des Thermodruckkopfes bearbeitet werden soll, so wird die Anpreßrolle betätigt, die den Datenträger gegen den Thermodruckkopf drückt. Bevorzugt ist der Thermodruckkopf in einer Ausbuchtung des Kanals vorgesehen, sodaß der Datenträger geringfügig gewölbt wird. Die Anordnung außerhalb der Transportbahn vermeidet die unnötige Verschmutzung und Abnützung des Thermodruckkopfes, der, da die Anpreßrolle ohnedies bewegt wird, in der Ausbuchtung fixiert bzw. begrenzt nachgiebig angeordnet ist.

Eine erste bevorzugte Ausführung sieht vor, daß die Kennzeichnungseinrichtung einen Strichcodeleser und einen Magnetstreifenleser und/oder Leser für ein insbesondere wiederbeschreibbares Elektronikmodul (IC) aufweist, sodaß Datenträger mit einem Strichcode, mit einem Magnetstreifen und/oder mit einem Elektronikmodul maschinell gelesen und bei Bedarf auch thermisch bearbeitet werden können, wenn beispielsweise der Speicherinhalt oder dessen Änderungen visuell lesbar zu machen oder ein Strichcode aufzubringen ist. Ein nur zu überprüfender Datenträger läuft in der ebenen Transportbahn frei durch. Nach der Überprüfung ist seine Rückführung oder aber auch seine Ausgabe am anderen Ende möglich.

Für die Bewegung der Anpreßrolle ist bevorzugt vorgesehen, daß die Anpreßrolle auf einer mittels eines Exzenterelementes anhebbaren Schwinge gelagert ist. Der Hub der Anpreßrolle läßt sich dabei dadurch begrenzen, daß das Exzenterelement eine Mitnehmerrolle aufweist, die auf einem schwenkend angetriebenen Kurbelarm angeordnet ist, und die Mitnehmerrolle in einen Schlitz der Schwinge eingreift.

Die Anwendungsmöglichkeiten der Vorrichtung lassen sich weiter verbessern, wenn sich die Transportbahn im Anschluß an die Kennzeichnungseinrichtung gabelt und eine umschaltbare Weiche in eine Seitenstrecke vorgesehen ist. Dies ermöglicht beispielsweise die Bearbeitung von zwei Datenträgern, beispielsweise einer Wert- und einer Kredit- oder Scheckkarte: Für die zuerst eingeführte Wertkarte kann beispielsweise ein aufzudruckender Preis od.dgl. festgelegt werden, in dem entsprechende Informationen von einer der Leseeinrichtungen bereit gestellt werden. Der Datenträger wird dann über die Weiche in die als Parkbahn dienende Seitenstrecke gebracht, worauf als zweiter Datenträger die Kreditkarte eingeführt, bearbeitet und wieder ausgegeben wird. Dies erfordert üblicherweise keinen Bedruckungsvorgang. Nachdem die Kreditkarte wieder ausgegeben worden ist, wird die zuerst eingeführte Wertkarte aus der Parkbahn zurückgeholt, mittels des Thermodruckers bedruckt und ebenfalls wieder ausgegeben. Die schaltbare Weiche weist bevorzugt eine schwenkbar gelagerte Weichenklappe auf, und wird mittels einer angetriebenen Steuerscheibe bewegt, auf der eine Kulissenbahn ausgebildet ist. Damit ein in der Seitenstrecke abgelegter Datenträger seine Position nicht verändert, ist in einer bevorzugten Ausführung vorgesehen, daß in der abzweigenden Seitenstrecke der Transportbahn eine Klemmeinrichtung vorgesehen ist. Die Klemmeinrichtung wird bevorzugt ebenfalls über die Steuerscheibe betätigt, wofür auf der Steuerscheibe eine zweite Kulissenbahn vorgesehen sein kann. Selbstverständlich können anstelle der Kulissenbahn auch andere Antriebe für die Weichenklappe und/oder die Klemmeinrichtung vorgesehen sein, beispielsweise elektromagnetische Antriebe, die auch einzeln und unabhängig voneinander einsetzbar sein können.

Eine weitere bevorzugte Ausführung kann vorsehen, daß von der Transportbahn zwei Seitenstrecken abzweigen, wobei jede der beiden Seitenstrecken eine Weichenklappe und eine Klemmeinrichtung aufweist. Dies erlaubt es, über eine der beiden Seitenstrecken einen erst in der Vorrichtung zuzuschneidenden Streifen von einer Vorratsrolle zuzuführen, sodaß die Vorrichtung auch zur Ausgabe anwendungsspezifisch bedruckter Datenträger, beispielsweise von Fahrkarten eingesetzt werden kann, ohne die anderen beschriebenen Möglichkeiten zu behindern.

Insbesondere in dieser Ausführung ist die Kulissensteuerung von besonderem Vorteil, da eine besonders einfache Konstruktion dann gegeben ist, wenn den beiden Weichenklappen und den beiden Klemmeinrichtungen eine gemeinsame, drehbar angetriebene Steuerscheibe zugeordnet ist, auf der eine gemeinsame Kulissenbahn für die beiden Weichenklappen und eine zweite, gemeinsame Kulissenbahn für die beiden Schwenkhebel der Klemmeinrichtungen vorgesehen sind.

Nachstehend wird nun die Erfindung anhand der Figuren der beiliegenden Zeichnung näher beschrieben, ohne darauf beschränkt zu sein.

Es zeigen:
- Fig. 1: einen schematischen Längsschnitt durch eine Ausführung einer erfindungsgemäßen Vorrichtung
- Fig. 2: eine schematische Draufsicht auf Teile der Vorrichtung, und
- Fig. 3: vergrößert den Weichen- und Klemmechanismus.

In einem Gehäuse 1 erstreckt sich ein durch zwei seitliche U-Schienen 20 bestimmter flacher Kanal 2, dem von einem Motor 11 angetriebene, und nicht angetriebene, starr oder elastisch gelagerte Rollen 10 für den Transport eines kartenförmigen Datenträgers durch den Kanal 2 zugeordnet sind. Entlang des Kanales 2, der eine ebene Transportbahn definiert, sind für die jeweilige Positionsbestimmung mehrere Lichtschranken 25 vorgesehen, von denen nur eine angedeutet ist. Eine Lese-Kennzeichnungseinrichtung für alle bekannten Arten von kartenförmigen Datenträgern umfaßt an jeder Kanalflachseite einen mittigen Strichcodeleser 12, einen Thermodruckkopf 15 mit einer gegenüberliegenden Anpreßrolle 16, zumindest einen außenseitig angeordneter magnetischer Leseschreibkopf 13 mit einer gegenüberliegenden Anpreßrolle 14, und einem IC-Leser 26 zur berührungslosen Kommunikation mit einem insbesondere im Inneren des Datenträgers eingebetteten Elektronikmodul.

Zwischen dem Strichcodeleser 12 und dem Magnetstreifenleser 13 ist der Kanal 2 mit einer Ausbuchtung 9 versehen, in der der Thermodruckkopf 15 außerhalb der Transportbahn angeordnet ist. Den Kanal 2 passierende Datenträger kommen daher nicht mit dem Thermodruckkopf 15 in Berührung. Soll ein, einen thermosensitiven Bereich aufweisender Datenträger bedruckt werden, wird die Anpreßrolle 16 angehoben, sodaß der Datenträger gewölbt und schließlich bedruckt wird. Somit erfolgt die Wölbung des Datenträgers nur im jeweils erforderlichen Zeitpunkt und in jenem Ausmaß, das zu einer bestmöglichen Bedruckung führt. Die Anpreßrolle 16 wird in einem weit größeren Ausmaß als bei bekannten Vorrichtungen bewegt, da der zu überwindende Spalt breiter als die größte Dicke der durchzuführenden Datenträger ist. Der Anlagebereich der Anpreßrolle 16 wird somit von einer Position außerhalb der Transportbahn im wesentlichen durch diese hindurch an die andere Seite der Transportbahn bewegt und der Spalt auf die gewünschte Breite verringert.

Der Thermodruckkopf 15 kann in der Ausbuchtung 9 fest und die Anpreßrolle 16 geringfügig nachgiebig angeordnet sein.

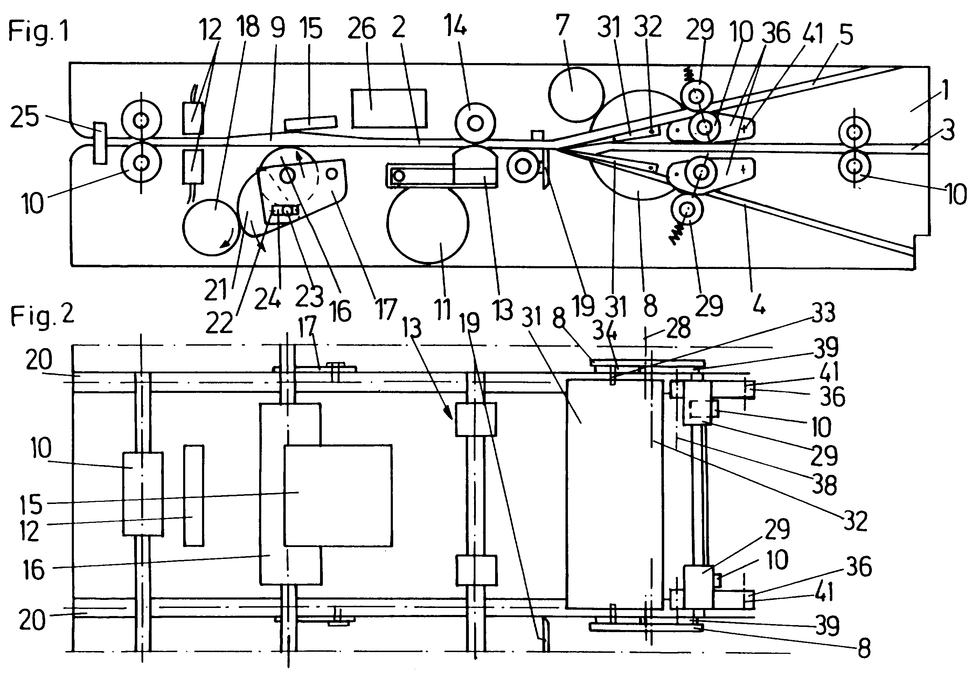

Bevorzugt ist die in Fig. 1 gezeigte Hubbegrenzung vorgesehen, wobei die angetriebene Anpreßrolle 16 an einer Schwinge 17 gelagert ist, in der ein zur Transportbahn etwa paralleler Schlitz 24 vorgesehen ist. Ein von einem Motor 18 um die Achse 22 schwenkbar angetriebenes Zahnsegment 21 trägt eine in den Schlitz 24 eingreifende Mitnehmerrolle 23. Wird das Zahnsegment 21 in die eingezeichnete Richtung verschwenkt, so bewegt sich die Mitnehmerrolle 23 in einem Kreisbogen nach oben, was einen maximalen Hub der Anpreßrolle 16 bewirkt. In diesem Fall ist bevorzugt der Thermodruckkopf 16 geringfügig nachgiebig in der Ausbuchtung 9 vorgesehen, sodaß dessen nicht gezeigte Rückstellfeder den Anpreßdruck an dem hochgewölbten Datenträger bestimmt.

Im Anschluß an die Lese-Kennzeichnungseinrichtung gabelt sich die Transportbahn in eine geradlinige Fortsetzung 3 und zwei Seitenstrecken 4,5, die schräg nach unten bzw. nach oben führen. An der Gabelung ist eine schaltbare Weiche 6 vorgesehen, die aus ihrer in der Transportbahn 2,3 liegenden Mittelstellung von einem Elektromotor 7 auf die untere oder obere Seitenstrecke 4,5 schaltbar ist. Zumindest die Fortsetzung 3 der Transportbahn und eine Seitenstrecke 4 sind endseitig offen, sodaß die Datenträger nicht nur hin- und herbewegt, sondern auch von beiden Seiten durch die Vorrichtung hindurchtransportiert werden können. Vor der Weiche 6 ist dem Kanal 2 eine Schneidevorrichtung 19 zugeordnet, mit deren Hilfe Datenträger von einer Vorratsrolle abgeschnitten werden können, die beispielsweise durch die Seitenstrecke 4 zugeführt werden. Die Seitenstrecke 5 ist insbesondere als Parkbahn für einen Datenträger gedacht, wenn währenddessen ein zweiter Datenträger in der Vorrichtung bearbeitet werden soll. Beiden Seitenstrecken 4,5 ist eine Klemmeinrichtung 30 zugeordnet, die bei geschlossener Weiche 6 wirksam ist.

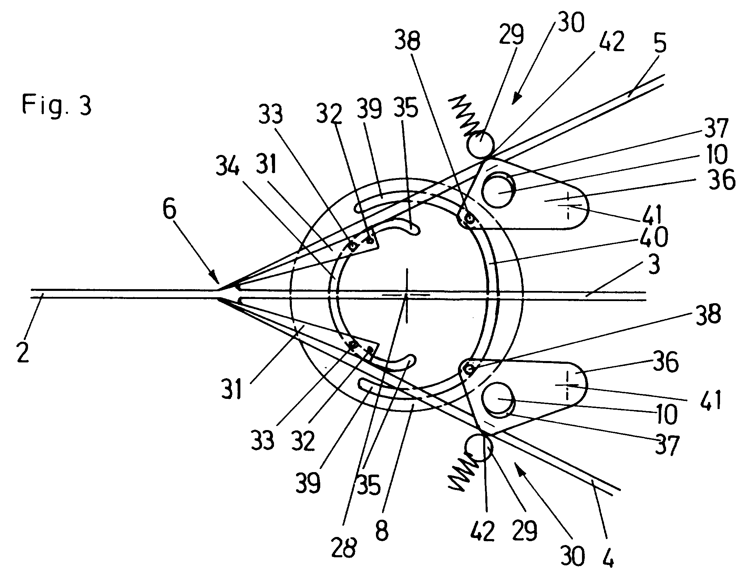

Für die Schaltung der Weiche 6 aus der in Fig. 3 gezeigten Mittelstellung in die in Fig. 1 gezeigte Stellung, die die obere Seitenstrecke 5 mit der Transportbahn verbindet, ist eine Einrichtung vorgesehen, die eine von einem Motor 7 angetriebene Steuerscheibe 8 aufweist. Auf der Steuerscheibe 8 ist eine erste Kulissenbahn 34 für die Bewegung zweier Weichenklappen 31 und eine zweite Kulissenbahn 39 für die Bewegung zweier Schwenkhebel 36 ausgebildet. Die Weichenklappen 31 sind jeweils um eine Achse 32 schwenkbar gelagert und sind mit einem Stift 33 in der Kulissenbahn 34 geführt, die über einen mittleren Winkelbereich von beispielsweise 160° kreisbogenförmig konzentrisch zur Achse 28 der Steuerscheibe 8 verläuft und sich in den beiden Endbereichen 35 beispielsweise über einen Winkel von etwa 20° an die Achse 28 annähert. Jede Weichenklappe 31 ändert daher aus der in Fig. 3 gezeigten Mittelstellung, in der sie in den Anfangsbereich der jeweiligen Seitenstrecke 4,5 versenkt ist, zu Beginn der Drehung der Steuerscheibe 8 ihre Lage nicht, schwenkt jedoch auf die jeweils andere Seite der Transportbahn, sobald der Stift 33 in den Endbereich 35 eintritt.

Eine ähnliche Bewegung vollführen die Schwenkhebel 36, die um die Achse 41 schwenkbar sind, und einen Stift 38 aufweisen, der in die zweite Kulissenbahn 39 eingreift. Diese verläuft in einem Mittelbereich 40 näher zur Achse 28 der Steuerscheibe 8 als in den beiden Endbereichen, in denen jeder Schwenkhebel 36 nach außen gedrückt wird. Jeder Schwenkhebel 36 weist einen Schlitz 37 auf, durch den die Achse der angetriebenen Transportrollen 10 verläuft, sodaß die Bewegung des Schwenkhebels nach außen möglich ist. Die gemäß Fig. 1 oben federnd gegen die Transportrolle 10 beaufschlagte, nicht angetriebene Transportrolle 29 wird von den mit einem Klemmbereich 42 versehenen Schwenkhebel 36 nach außen gedrückt, wobei der Schwenkhebel 36 einen zwischen den Transportrollen 10,29 liegenden Datenträger von der angetriebenen Transportrolle 10 nach außen abhebt, die dadurch leerläuft, und zwischen dem die Rolle 10 überragenden Klemmbereich 42 und der nach außen gedrückten Transportrolle 29 festklemmt (Fig. 1 unten). Diese Position ist immer dann gegeben, wenn die Seitenstrecke 4,5 gesperrt ist, das heißt die Weichenklappe 31 den Eingang verschließt (Fig. 1 unten und Fig. 3 oben und unten).

## Patentansprüche

1. Vorrichtung zum Lesen und Kennzeichnen von bedruckbaren, kartenförmigen Datenträgern, die eine thermosensitive Schicht aufweisen, mit einem Transportmechanismus zur linearen Bewegung des Datenträgers in einem eine Transportbahn bestimmenden flachen Kanal (2), mit einer einen Thermodruckkopf (15) aufweisenden Einrichtung zur visuell lesbaren Kennzeichnung des Datenträgers, und mit einer dem Thermodruckkopf (15) gegenüberliegenden, zum Thermodruckkopf (15) hin bewegbar angeordneten Anpreßrolle (16), dadurch gekennzeichnet, daß der Thermodruckkopf (15) so weit außerhalb der Transportbahn vorgesehen ist, daß thermisch nicht zu bedruckende Datenträger, die den Thermodruckkopf passieren, diesen nicht berühren.

2. Vorrichtung nach Anspruch 1, dadurch gekennzeichnet, daß der Thermodruckkopf (15) in einer Ausbuchtung (9) des Kanals (2) angeordnet ist.

3. Vorrichtung nach Anspruch 1 oder 2, dadurch gekennzeichnet, daß die Kennzeichnungseinrichtung einen Strichcodeleser (12), einen Magnetstreifenleser (13) und/oder einen Leser (26) für ein insbesondere wiederbeschreibbares Elektronikmodul aufweist, und daß der Thermodruckkopf (15) und die Kanalausbuchtung (9) bevorzugt zwischen dem Strichcodeleser (12) und dem Magnetstreifenleser (13) angeordnet sind.

4. Vorrichtung nach einem der Ansprüche 1 bis 3, dadurch gekennzeichnet, daß die Anpreßrolle (16) auf einer mittels eines Exzenterelementes anhebbaren Schwinge (17) gelagert ist.

5. Vorrichtung nach Anspruch 4, dadurch gekennzeichnet, daß das Exzenterelement eine Mitnehmerrolle (23) aufweist, die auf einem schwenkend angetriebenen Kurbelarm (21) angeordnet ist, und die Mitnehmerrolle (23) in einen Schlitz (24) der Schwinge (17) eingreift.

6. Vorrichtung nach einem der Ansprüche 1 bis 5, dadurch gekennzeichnet, daß an jeder der beiden Kanalflachseiten mittig ein Strichcodeleser (12) vorgesehen ist.

7. Vorrichtung nach einem der Ansprüche 1 bis 6, dadurch gekennzeichnet, daß von der ebenen Transportbahn im Anschluß an die Kennzeichnungseinrichtung zumindest eine Seitenstrecke (4,5) abzweigt und eine umschaltbare Weiche (6) vorgesehen ist.

8. Vorrichtung nach Anspruch 7, dadurch gekennzeichnet, daß die schaltbare Weiche (6) eine schwenkbar gelagerte Weichenklappe (31) aufweist, die mit einem Führungsstift (33) in eine Kulissenbahn (34) eingreift, und die Kulissenbahn (34) auf einer drehbar angetriebenen Steuerscheibe (8) ausgebildet ist.

9. Vorrichtung nach Anspruch 8, dadurch gekennzeichnet, daß die Kulissenbahn (34) einen zur Achse (28) der Steuerscheibe (8) konzentrischen Bereich und einen die Verschwenkung der Weichenklappe (31) bewirkenden, exzentrischen Endbereich (35) aufweist.

10. Vorrichtung nach einem der Ansprüche 7 bis 8, dadurch gekennzeichnet, daß in der abzweigenden Seitenstrecke (4,5) der Transportbahn eine Klemmeinrichtung (30) vorgesehen ist.

11. Vorrichtung nach Anspruch 10, dadurch gekennzeichnet, daß die Klemmeinrichtung (30) einen Schwenkhebel (36) aufweist, der in die Seitenstrecke (4,5) einschwenkbar ist.

12. Vorrichtung nach Anspruch 11, dadurch gekennzeichnet, daß eine nicht angetriebene Transportrolle (29) gegen den Schwenkhebel (36) federbeaufschlagt an der dem Schwenkhebel (36) gegenüberliegenden Seite der Seitenstrecke (4,5) vorgesehen ist.

13. Vorrichtung nach Anspruch 11 oder 12, dadurch gekennzeichnet, daß der Schwenkhebel (36) einen Führungsstift (38) aufweist, der in eine zweite, auf der Steuerscheibe (8) ausgebildete Kulissenbahn (40) eingreift.

14. Vorrichtung nach Anspruch 13, dadurch gekennzeichnet, daß die Kulissenbahn (39) einen zur Achse (28) der Steuerscheibe (8) konzentrischen Bereich und ein die Auslenkung des Schwenkhebels (36) bewirkenden Endbereich (39) aufweist.

15. Vorrichtung nach einem der Ansprüche 7 bis 14, dadurch gekennzeichnet, daß von der Transportbahn zwei Seitenstrecken (4,5) abzweigen, wobei jede der beiden Seitenstrecken (4,5) eine Weichenklappe (31) und eine Klemmeinrichtung (30) aufweist.

16. Vorrichtung nach Anspruch 15, dadurch gekennzeichnet, daß den beiden Weichenklappen (31) und den beiden Klemmeinrichtungen (30) eine gemeinsame, drehbar angetriebene Steuerscheibe (8) zugeordnet ist, auf der eine gemeinsame Kulissenbahn (33) für die beiden Weichenklappen (31) und eine gemeinsame Kulissenbahn (40) für die beiden Schwenkhebel (36) der Klemmeinrichtungen (30) vorgesehen sind.

## Claims

1. Apparatus for reading and identifying data carriers in card form which can be printed upon and which have a thermosensitive layer, comprising a transport mechanism for linear movement of the data carrier in a shallow passage (2) defining a transport path, a means having a thermal printing head (15) for visually readable identification of the data carrier, and a pressure roller (16) which is disposed opposite the thermal printing head (15) and which is arranged movably towards the printing head (15), characterized in that the thermal printing head (15) is arranged so far outside the transport path that data carriers which are not to be thermally printed upon and which pass the thermal printing head do not touch same.

2. Apparatus according to claim 1 characterized in that the thermal printing head (15) is arranged in a bulge portion (9) of the passage (2).

3. Apparatus according to claim 1 or claim 2 characterized in that the identification means has a bar code reader (12), a magnetic strip reader (13) and/or a reader (26) for an in particular re-writable electronic module, and that the thermal printing head (15) and the passage bulge portion (9) are preferably arranged between the bar code reader (12) and the magnetic strip reader (13).

4. Apparatus according to one of claims 1 through 3 characterized in that the pressure roller (16) is mounted on a rocker member (17) which can be raised by means of an eccentric element.

5. Apparatus according to claim 4 characterized in that the eccentric element has an entrainment roller (23) which is arranged on a pivotably driven crank arm (21) and the entrainment roller (23) engages into a slot (24) in the rocker member (17).

6. Apparatus according to one of claims 1 through 5 characterized in that a bar code reader (12) is provided centrally at each of the two flat sides of the passage.

7. Apparatus according to one of claims 1 through 6 characterized in that at least one side section (4, 5) branches from the flat transport path subsequently to the identification means, and there is provided a routing device (6) which can be switched over.

8. Apparatus according to claim 7 characterized in that the switchable routing device (6) has a pivotably mounted routing flap (31) which engages with a guide pin (33) into a cam track (34) and the cam track (34) is provided on a rotatably driven control disk (8).

9. Apparatus according to claim 8 characterized in that the cam track (34) has a region which is concentric with respect to the axis (28) of the control disk (8) and an eccentric end region (35) for producing the pivotal movement of the routing flap (31).

10. Apparatus according to one of claims 7 through 8 characterized in that a clamping device (30) is provided in the branching-off side section (4, 5) of the transport path.

11. Apparatus according to claim 10 characterized in that the clamping device (30) has a pivot lever (36) which can be pivoted into the side section (4, 5).

12. Apparatus according to claim 11 characterized in that an undriven transport roller (29) is provided, spring-loaded towards the pivot lever (36), at the side of the side section (4, 5) which is opposite the pivot lever (36).

13. Apparatus according to claim 11 or claim 12 characterized in that the pivot lever (36) has a guide pin (38) engaging into a second cam track (40) provided on the control disk (8).

14. Apparatus according to claim 13 characterized in that the cam track (39) has a region which is concentric relative to the axis (28) of the control disk (8) and an end region (39) which produces the deflection movement of the pivot lever (36).

15. Apparatus according to one of claims 7 through 14 characterized in that two side sections (4, 5) branch from the transport path, each of the two side sections (4, 5) having a routing flap (31) and a clamping device (30).

16. Apparatus according to claim 15 characterized in that associated with the two routing flaps (31) and the two clamping devices (30) is a common, rotatably driven control disk (8) on which are provided a common cam track (33) for the two routing flaps (31) and a common cam track (40) for the two pivot levers (36) of the clamping devices (30).

## Revendications

1. Dispositif pour la lecture et l'identification de supports d'information imprimables, sous forme de cartes, qui disposent d'une couche thermosensible, avec un mécanisme de transport pour un mouvement linéaire du support d'information dans un canal plat (2) définissant un circuit de transport, avec un dispositif doté d'une tête d'impression thermique (15) pour l'identification par lecture visuelle du support d'information, et avec un rouleau de pression (16), se trouvant à l'opposé de la tête d'impression thermique (15) mobile en direction de la tête d'impression thermique (15), caractérisé en ce que la tête d'impression thermique (15) est prévue suffisamment à l'extérieur du circuit de transport pour que des supports d'information ne devant pas subir d'impression thermique et passant devant la tête d'impression thermique n'entrent pas en contact avec celle-ci.

2. Dispositif selon la revendication 1, caractérisé en ce que la tête d'impression thermique (15) est disposée dans un évasement (9) du canal (2).

3. Dispositif selon la revendication 1 ou 2, caractérisé en ce que le dispositif d'identification présente un lecteur de code à barres (12), un lecteur de piste magnétique (13) et/ou un lecteur (26) pour un module électronique, en particulier réinscriptible, et en ce que la tête d'impression thermique (15) et l'évasement du canal (9) sont disposés de préférence entre le lecteur de code à barres (12) et le lecteur de piste magnétique (13).

4. Dispositif selon l'une quelconque des revendications 1 à 3, caractérisé en ce que le rouleau de pression (16) repose sur un élément oscillant (17) pouvant être soulevé au moyen d'un élément excentrique.

5. Dispositif selon la revendication 4, caractérisé en ce que l'élément excentrique dispose d'un rouleau à'entraînement (23) agencé sur un bras de manivelle (21) entraîné de façon pivotante, et en ce que le rouleau d'entraînement (23) s'engage dans une fente (24) de l'élément oscillant (17).

6. Dispositif selon l'une quelconque des revendications 1 à 5, caractérisé en ce que sur chacun des deux côtés plats du canal, un lecteur de code à barres (12) est prévu de façon centrée.

7. Dispositif selon l'une quelconque des revendications 1 à 6, caractérisé en ce qu'à partir du circuit de transport plat, suivant le dispositif d'identification, au moins une voie latérale (4, 5) bifurque, et en ce qu'un aiguillage réversible (6) est prévu.

8. Dispositif selon la revendication 7, caractérisé en ce que l'aiguillage réversible (6) présente une bascule pivotante (31) qui s'engage dans une coulisse (34) par l'intermédiaire d'un goujon de guidage (33), et en ce que la coulisse (34) est formée sur un disque de commande (8) entraîné en rotation.

9. Dispositif selon la revendication 8, caractérisé en ce cue la coulisse (34) présente une partie concentrique par rapport à l'axe (28) du disque de commande (8) et une partie d'extrémité (35) excentrique provoquant le pivotement de la bascule (31).

10. Dispositif selon l'une quelconque des revendications 7 à 8, caractérisé en ce qu'un dispositif de serrage (30) est prévu sur la voie latérale bifurquante (4, 5) du circuit de transport.

11. Dispositif selon la revendication 10, caractérisé en ce que le dispositif de serrage (30) présente un levier pivotant (36) pouvant s'engager par pivotement dans la voie latérale (4, 5).

12. Dispositif selon la revendication 11, caractérisé en ce qu'un rouleau de transport (29) non entraîné est prévu, chargé par ressort sur le levier pivotant (36), sur le côté opposé au levier pivotant (36) de la voie latérale (4, 5).

13. Dispositif selon la revendication 11 ou 12, caractérisé en ce que le levier pivotant (36) présente un goujon de guidage (38) qui s'engage dans une deuxième coulisse (40) formée sur le disque de commande (8).

14. Dispositif selon la revendication 13, caractérisé en ce que la coulisse (39) présente une partie concentrique par rapport à l'axe (28) du disque de commande (8) et une partie d'extrémité (39) provoquant la déviation du levier pivotant (36).

15. Dispositif selon l'une quelconque des revendications 7 à 14, caractérisé en ce que deux voies latérales (4, 5) bifurquent par rapport au circuit de transport, chacune des deux voies latérales (4, 5) présentant une bascule (31) et un dispositif de serrage (30).

16. Dispositif selon la revendication 15, caractérisé en ce que les deux bascules (31) et les deux dispositifs de serrage (30) sont associés à un disque de commande (8) commun, entraîné en rotation, sur lequel une coulisse commune (33) aux deux bascules (31) et une coulisse commune (40) aux deux leviers pivotants (36) des dispositifs de serrage (30) sont prévues.
